# FASCICULE DE BREVET EUROPEEN

(11) **EP 1 771 673 B1**
(45) Date de publication et mention de la délivrance du brevet: **13.05.2009**
(21) Numéro de dépôt: 05792158.7
(22) Date de dépôt: 13.07.2005
(51) Int. Cl.: F16H 61/02

(54) **PROCEDE DE CONTROLE DES CHANGEMENTS DE RAPPORT LORS DES COMMUTATIONS DE LOIS DE PASSAGE OU DE VARIOGRAMMES**
VERFAHREN ZUR STEUERUNG DER GANGSCHALTUNG WÄHREND DES SCHALTREGEL- ODER VARIOGRAMMWECHSELS
METHOD FOR CONTROLLING GEAR CHANGE DURING SHIFTING RULE OR VARIOGRAM SWITCHING

(30) Priorité: 21.07.2004 FR 0451595
(43) Date de publication de la demande: 11.04.2007
(73) Titulaire: RENAULT S.A.S., 92100 Boulogne Billancourt (FR)
(72) Inventeur: TAFFIN, Christian, F-78320 LE MESNIL ST DENIS (FR); POISSON, Carine, F-93160 NOISY LE GRAND (FR)
(74) Mandataire: Rougemont, Bernard
(86) Numéro de dépôt international: PCT/FR2005/050582
(87) Numéro de publication internationale: WO 2006/018563

(56) Documents cités:
- DE-A1- 4 440 706
- FR-A- 2 827 026
- US-A- 4 889 015
- US-A- 4 996 893
- US-A- 5 157 609
- US-A- 5 262 952
- US-A- 5 390 117
- US-A- 6 080 083

## Description

La présente invention se rapporte au contrôle des transmissions de véhicule automatisées, à rapports discrets et aussi à variations continues, du type boîte de vitesses automatique, boîte de vitesses robotisée, transmission continûment ou infiniment variable.

Plus précisément, elle concerne le contrôle des changements de rapport d'une transmission automatique disposant de lois de passage ou de variogrammes distincts, appliqués selon les conditions de fonctionnement du véhicule.

La publication DE-A-44 40 706 constitue l'état de la technique le plus proche de l'objet des revendications indépendantes 1 et 4.

Selon une disposition classique, illustrée notamment par la publication FR 2 545 567, les décisions de changement de rapports d'une transmission à rapports discrets sont prises lorsqu'un point représentatif du fonctionnement de la transmission dans un plan de coordonnées, vitesse de déplacement du véhicule et charge du moteur (position pédale d'accélérateur, couple moteur, puissance ...) croise une courbe de passage montant ou une courbe de passage descendant. Dans cette représentation, l'ensemble des courbes de passage montants et descendants définit une loi de passage régissant pour la transmission, l'ensemble des situations rencontrées par le véhicule, son groupe motopropulseur, et son conducteur.

Dans le cas de transmissions infiniment ou continûment variables, les variations de rapports sont régies par une cartographie ou variogramme, regroupant, de façon analogue, une famille de courbes de passage, couvrant toute la plage de rapports de la transmission.

Les lois de passage et les variogrammes sont généralement établis de telle sorte que la consommation de carburant soit la plus faible possible, sous réserve d'agrément acoustique, et de reprises satisfaisantes. Dans ces conditions, les passages montants en faible et moyenne charge s'effectuent le plus souvent à bas régime.

Sur ces principes de base, ont été développées des transmissions dites « auto-adaptatives », qui peuvent comporter comme illustré par la publication FR 2 741 931, plusieurs lois de passage, adaptées aux diverses conditions de roulage (villes, montée, descente, ...), au style de conduite du conducteur, etc., afin d'améliorer l'agrément de conduite en toutes circonstances. Les transmissions disposant de lois auto-adaptatives, sont capables de commuter entre différentes lois de passages, ou variogrammes (lorsque le rapport est continûment variable).

La commutation des lois de passage ou des variogrammes peut se traduire immédiatement par un changement de rapport qui peut surprendre le conducteur. En effet, un tel changement de rapport résulte en premier lieu d'une réaction de la transmission à l'évolution de son propre fonctionnement et non à une modification d'intention ou de comportement du conducteur et/ou du véhicule. Une telle situation peut se rencontrer dans des conditions similaires dans le cas de transmissions à rapports discrets, et dans celui de transmissions continues.

L'invention vise à remédier à cet inconvénient des transmissions auto-adaptatives à rapports discrets et à variation continue connues.

Dans ce but, elle propose que les demandes de changement de rapport consécutives à une commutation de loi de passage ou de variogramme soient détectées et réalisées uniquement sous réserve de la vérification de conditions restrictives.

Conformément à l'invention, pour une transmission à rapports discrets, les demandes de passage au rapport inférieur ou supérieur consécutives à une commutation de loi de passage de transmission automatique à rapports discrets sont momentanément suspendues.

Pour une transmission à variation continue, le rapport demandé consécutivement à une commutation de variogramme subit un filtrage, dont la constante de temps est relativement élevée.

La présente invention sera mieux comprise à la lecture de la description suivante d'un mode de réalisation non limitatif de celle-ci, en liaison avec les dessins annexés, sur lesquels :
- la figure 1 rappelle le principe général des lois de passage de vitesses,
- la figure 2 illustre un exemple de gestion du passage à un rapport inférieur dans une transmission à rapports discrets, et
- la figure 3 illustre un exemple de gestion du passage à un rapport inférieur dans une transmission à changements de rapport continus.

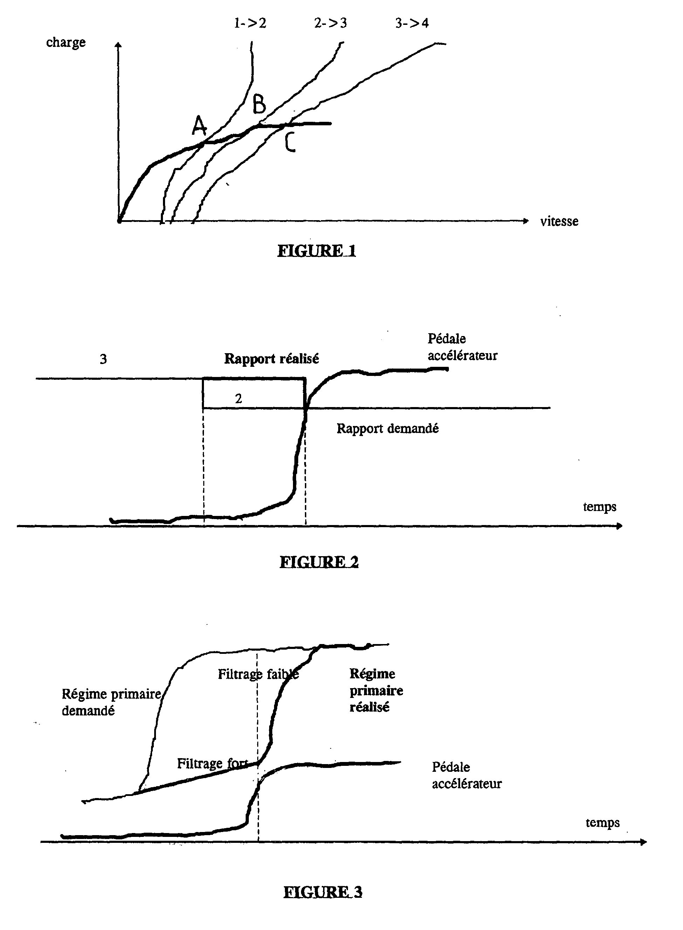

La figure 1 illustre les changements de rapports d'une transmission à rapports discrets par exemple, lorsque le véhicule est en phase d'accélération. Dans cet exemple de séquence non limitatif, les passages s'effectuent successivement aux points A, B et C de croisement des courbes 1 / 2, 2 / 3, 3 / 4 dans un plan vitesse de déplacement véhicule / charge moteur. Selon l'enseignement de la publication FR2 545 567, les courbes de passage descendant (non représentées sur le schéma) seraient décalées vers la gauche par rapport aux courbes de passage montant correspondantes, pour limiter les phénomènes d'oscillation entre deux rapports consécutifs, dits phénomènes de «pompage ».

Dans le cas d'une transmission auto-adaptative, qui dispose de plusieurs lois de passage, on a aussi dans un plan plusieurs jeux de courbes, qui correspondent à chaque loi de passage. Cependant, les jeux de courbes sont décalés les uns par rapport aux autres. Ainsi en cas de commutation de loi de passage, un changement de rapport peut intervenir, car une courbe passe devant un point de fonctionnement. Ce passage de vitesse, qui n'aurait sans doute pas été déclenché sans la commutation de loi de passage, peut surprendre le conducteur.

Conformément à l'invention, les demandes de passage au rapport inférieur ou supérieur consécutivement à une commutation de loi de passage de transmission automatique à rapports discrets sont momentanément suspendues. Elles peuvent toutefois être autorisées si le véhicule perd de la vitesse, lorsque l'écart entre la vitesse véhicule au moment de la commutation de loi de passage et la vitesse véhicule instantanée est supérieure à un seuil d'écart prédéterminé. Cette condition permet d'améliorer la réactivité du véhicule lorsque c'est nécessaire, sans surprendre le conducteur.

Le passage peut aussi être autorisé si le conducteur accélère fortement, par exemple lorsque l'information issue du capteur pédale d'accélérateur augmente fortement, ou que sa dérivée par rapport au temps est positivement élevée. Cette condition permet d'améliorer la réactivité du véhicule, lorsque le conducteur exprime un souhait de forte accélération.

La figure 2 illustre l'application de cette disposition dans le cas où une demande de changement de rapport inférieur 3 / 2 a lieu consécutivement à une commutation de lois de passage. Ce schéma, montrant la position de la pédale et le rapport de transmission sur un axe des temps, fait apparaître le décalage entre la demande de changement de rapport et sa réalisation. Ainsi, le passage n'est réalisé que lorsque le conducteur a enfoncé fortement sa pédale d'accélérateur, manifestant ainsi son souhait d'une forte accélération.

Concernant les demandes de passage au rapport inférieur, l'invention prévoit donc qu'elles soient autorisées consécutivement à une commutation de loi de passage, uniquement si l'une des conditions suivantes est vérifiée :
- le véhicule subit une diminution de vitesse supérieure en valeur absolue à un seuil d'écart de vitesse déterminé, ou
- le véhicule subit une accélération positive significative.

Pour apprécier si l'accélération est suffisante, on peut considérer le déplacement de la pédale d'accélérateur, ou sa vitesse de déplacement.

Ainsi, conformément à l'invention, le passage au rapport inférieur peut être autorisé si l'enfoncement de la pédale d'accélérateur dépasse en valeur absolue un seuil de déplacement déterminé, ou si la dérivée de l'enfoncement de la pédale dépasse en valeur absolue un seuil de vitesse de déplacement préétabli.

L'invention propose également des mesures particulières pour autoriser, sous certaines conditions, le passage sur un rapport supérieur consécutivement à une commutation de lois de passage. Le passage sera autorisé si le temps écoulé à partir du moment de la commutation de loi de passage est important (quelques secondes) : cette condition permet de ne pas bloquer trop longtemps une demande à un passage de rapport plus élevé. Il sera également autorisé si le conducteur soulage légèrement l'accélérateur (et non fortement), ou si le régime moteur devient trop élevé (pour limiter les désagréments acoustiques).

Conformément à l'invention, les passages au rapport supérieur consécutifs à une commutation de loi de passage sont donc autorisés si l'une des conditions suivantes est vérifiée :
- le temps écoulé depuis la commutation dépasse un seuil de durée préétabli,
- le relevé de la pédale d'accélérateur est inférieur en valeur absolue à un seuil de déplacement prédéterminé, ou
- le régime du moteur dépasse un seuil de régime préétabli.

L'invention s'applique également au cas des transmissions à variation continue de rapport, ou continûment variables. Dans ce cas, le principe général de l'invention, selon lequel les demandes de changement de rapport consécutives à une commutation de loi de passage ou de variogramme sont détectées et réalisées uniquement sous réserve de l'application de conditions particulières, est mis en oeuvre de la façon suivante.

Lorsqu'un changement de rapport, ou ratio de vitesse, est demandé consécutivement à un changement de variogramme, le rapport demandé est filtré grâce à un filtre dont la nature n'est pas limitative (filtre du premier ordre, rampe, ...), mais dont la constante de temps reste assez élevée. Ainsi, le rapport demandé subit un filtrage, dont la constante de temps est relativement élevée.

La figure 3 illustre le cas d'une demande de réduction de rapport, induite par la forte augmentation du régime primaire de boîte. Dans cet exemple, l'augmentation a lieu consécutivement à un changement de variogramme. Conformément à l'invention, un filtrage fort est appliqué sur la consigne de régime primaire ; sur détection d'un souhait d'accélération du conducteur, par l'enfoncement important de la pédale d'accélérateur, un filtrage plus faible est appliqué, et le régime primaire rejoint alors rapidement la valeur demandée.

Dans le cas d'une réduction de rapport, la constante de temps devient faible (afin de privilégier la réactivité du véhicule), si le véhicule perd de la vitesse. Cette situation peut être prise en compte dès lors que l'écart entre la vitesse véhicule au moment de la commutation de loi de passage et la vitesse véhicule instantanée est supérieure à un seuil calibrable.

Cette disposition permet d'améliorer la réactivité du véhicule lorsque c'est nécessaire, sans surprendre le conducteur. La constante de temps peut aussi être réduite lorsque le conducteur accélère fortement, par exemple si l'information issue du capteur pédale d'accélérateur est élevée, ou lorsque sa dérivée par rapport au temps, est positivement élevée. Cette condition permet d'améliorer la réactivité du véhicule, lorsque le conducteur exprime un souhait de forte accélération.

De manière générale, en cas de demande de réduction de rapport consécutive à une commutation de variogramme, l'invention prévoit que la constante de temps soit réduite, si l'une des conditions suivantes est satisfaite :
- le véhicule a subi depuis la commutation de variogramme une réduction de vitesse telle que l'écart entre sa vitesse instantanée et sa vitesse lors de la commutation, est supérieur en valeur absolue à un seuil préétabli, ou
- le véhicule subit une accélération positive significative.

La décélération peut être suffisante, dès lors que l'enfoncement de la pédale d'accélérateur dépasse en valeur absolue un seuil de déplacement déterminé, ou que la dérivée de l'enfoncement de la pédale dépasse en valeur absolue un seuil de vitesse de déplacement préétabli.

Dans le cas d'une demande d'augmentation de rapport, l'augmentation de rapport est aussi réalisée avec une constante de filtrage. Lorsque le régime primaire demandé par le variogramme chute consécutivement à une commutation de variogramme, (phénomène équivalent au passage montant dans le cas d'une transmission à rapports discrets), alors un filtre est appliqué. Ce filtre peut être du premier ordre avec une constante de temps Tau, ce qui ralentit de façon contrôlée la chute de régime primaire de la transmission, et donc la chute du régime de rotation du moteur.

Cette constante de filtrage Tau, sera plus faible si le conducteur soulage légèrement, et non fortement l'accélérateur, par exemple si l'information issue du capteur pédale d'accélérateur décroît dans le temps. La constante sera également plus faible lorsque le régime moteur devient trop élevé (de manière à limiter les désagréments acoustiques).

Ainsi, en cas de demande d'augmentation de rapport consécutivement à une commutation de variogramme, la constante de temps est réduite si l'une des conditions suivantes est vérifiée :
- le relevé de la pédale d'accélérateur est inférieur en valeur absolue à un seuil de déplacement prédéterminé, ou
- le régime du moteur dépasse un seuil de régime préétabli.

## Revendications

1. Procédé de contrôle des changements de rapport d'une transmission automatique à rapports discrets disposant de lois de passage distinctes comportant plusieurs courbes de passage qui sont appliquées selon les conditions de fonctionnement du véhicule, **caractérisé en ce que** les demandes de passage au rapport inférieur sont autorisées consécutivement à une commutation de loi de passage, si l'une des conditions suivantes est vérifiée :
- le véhicule subit une diminution de vitesse supérieure en valeur absolue à un seuil d'écart de vitesse déterminé, ou
- le véhicule subit une accélération positive significative, et
**en ce que** les demandes de passage au rapport supérieur sont autorisées consécutivement à une commutation de lois de passage, si l'une des conditions suivantes est vérifiée :
- le temps écoulé depuis la commutation dépasse un seuil de durée préétabli,
- le relevé de la pédale d'accélérateur est inférieur en valeur absolue à un seuil de déplacement prédéterminé, ou
- le régime du moteur dépasse un seuil de régime préétabli.

2. Procédé de contrôle selon la revendication 1, **caractérisé en ce que** le passage au rapport inférieur est autorisé si l'enfoncement de la pédale d'accélérateur dépasse en valeur absolue un seuil de déplacement déterminé.

3. Procédé de contrôle selon la revendication 1 ou 2, **caractérisé en ce que** le passage au rapport inférieur est autorisé si la dérivée de l'enfoncement de la pédale d'accélérateur dépasse en valeur absolue un seuil de vitesse de déplacement préétabli.

4. Procédé de contrôle des changements de rapport d'une transmission automatique à variation continue disposant de variogrammes distincts comportant plusieurs courbes de passage qui sont appliquées selon les conditions de fonctionnement du véhicule, **caractérisé en ce que** les demandes de changement de rapport consécutives à une commutation de variogramme sont détectées et subissent un filtrage dont la constante de temps est relativement élevée, et **en ce que**, en cas de demande de réduction de rapport, la constante de temps est réduite si l'une des conditions suivantes est satisfaite :
- le véhicule a subi depuis la commutation de variogramme une réduction de vitesse telle que l'écart entre sa vitesse instantanée et sa vitesse lors de la commutation est supérieur en valeur absolue à un seuil préétabli, ou
- le véhicule subit une accélération positive significative.

5. Procédé de contrôle selon la revendication 4, **caractérisé en ce que** la constante de temps est réduite si l'enfoncement de la pédale d'accélérateur dépasse en valeur absolue un seuil de déplacement déterminé.

6. Procédé de contrôle selon la revendication 5, **caractérisé en ce que** la constante de temps est réduite si la dérivée de l'enfoncement de la pédale d'accélérateur dépasse en valeur absolue un seuil de vitesse de déplacement préétabli.

7. Procédé de contrôle selon la revendication 4, 5 ou 6, **caractérisé en ce que,** en cas de demande d'augmentation de rapport, la constante de temps est réduite si l'une des conditions suivantes est vérifiée :
- le relevé de la pédale d'accélérateur est inférieur en valeur absolue à un seuil de déplacement prédéterminé ou
- le régime du moteur dépasse un seuil de régime préétabli.

## Claims

1. Method for controlling gear changes in an automatic gearbox with discrete gear ratios using individual gearchange rules comprising multiple gearchange curves that are applied on the basis of the operating conditions of the vehicle, said method being **characterized in that** requests to change down a gear are granted after switching the gearchange rule, if one of the following conditions is true:
- the vehicle undergoes a speed reduction whose absolute value is greater than a predetermined speed difference threshold, or
- the vehicle undergoes a significant positive acceleration, and
**in that** requests to change up a gear are granted after switching gearchange rules, if one of the following conditions is true:
- time elapsed since the switch exceeds a predetermined time period threshold,
- the absolute value of the lifting of the accelerator pedal is less than a predetermined movement threshold, or
- the engine speed exceeds a predefined speed threshold.

2. Control method according to Claim 1, **characterized in that** changing down a gear is permitted if the absolute value of the depression of the accelerator pedal exceeds a predetermined movement threshold.

3. Control method according to Claim 1 or 2, **characterized in that** changing down a gear is permitted if the derivative of the absolute value of the depression of the accelerator pedal exceeds a predefined speed of movement threshold.

4. Method for controlling gear changes in a continuously variable automatic gearbox using individual variograms comprising multiple gearchange curves that are applied on the basis of the operating conditions of the vehicle, said method being **characterized in that** requests to change a gear after switching a variogram are detected and put through a filtering whose time constant is relatively high, and **in that**, in the case of a request to change down a gear, the time constant is reduced if one of the following conditions is satisfied:
- since the variogram switch, the vehicle has undergone a speed reduction such that the absolute value of the difference between its instantaneous speed and its speed at the time of the switch is greater than a predefined threshold, or
- the vehicle undergoes a significant positive acceleration.

5. Control method according to Claim 4, **characterized in that** the time constant is reduced if the absolute value of the depression of the accelerator pedal exceeds a predetermined movement threshold.

6. Control method according to Claim 5, **characterized in that** the time constant is reduced if the derivative of the absolute value of the depression of the accelerator pedal exceeds a predefined speed of movement threshold.

7. Control method according to Claim 4, 5 or 6, **characterized in that,** in the case of a request to change up a gear, the time constant is reduced if one of the following conditions is true:
- the absolute value of the lifting of the accelerator pedal is less than a predetermined movement threshold, or
- the engine speed exceeds a predefined speed threshold.

## Patentansprüche

1. Verfahren zur Steuerung der Schaltvorgänge eines automatischen Getriebes mit diskreten Gängen, die über unterschiedliche Schaltgesetze verfügen, welche mehrere Schaltkurven enthalten, die gemäß den Betriebsbedingungen des Fahrzeugs angewendet werden, **dadurch gekennzeichnet, dass** die Wünsche des Schaltens in den niedrigeren Gang nach einer Schaltgesetz-Umschaltung erlaubt werden, wenn eine der folgenden Bedingungen erfüllt ist:
- das Fahrzeug erfährt eine Geschwindigkeitsminderung, die im Absolutwert größer ist als eine bestimmte Geschwindigkeits-Abweichungsschwelle, oder
- das Fahrzeug erfährt eine signifikante positive Beschleunigung, und
dass die Wünsche des Schaltens in den höheren Gang nach einer Umschaltung von Schaltgesetzen erlaubt werden, wenn eine der folgenden Bedingungen erfüllt ist:
- die seit der Umschaltung vergangene Zeit überschreitet eine Schwelle vorab festgelegter Dauer,
- das Anheben des Gaspedals liegt im Absolutwert unter einer vorbestimmten Verstellungsschwelle, oder
- die Motordrehzahl überschreitet eine vorab festgelegte Drehzahlschwelle.

2. Steuerverfahren nach Anspruch 1, **dadurch gekennzeichnet, dass** das Schalten in den niedrigeren Gang erlaubt wird, wenn das Eindrücken des Gaspedals im Absolutwert eine bestimmte Verstellungsschwelle überschreitet.

3. Steuerverfahren nach Anspruch 1 oder 2, **dadurch gekennzeichnet, dass** das Schalten in den niedrigeren Gang erlaubt wird, wenn die Ableitung des Eindrückens des Gaspedals im Absolutwert eine vorab festgelegte Verstellungsgeschwindigkeitsschwelle überschreitet.

4. Verfahren zur Steuerung der Schaltvorgänge eines automatischen Getriebes mit stufenloser Regelung, das über unterschiedliche Variogramme verfügt, die mehrere Schaltkurven enthalten, welche gemäß den Betriebsbedingungen des Fahrzeugs angewendet werden, **dadurch gekennzeichnet, dass** die auf eine Variogramm-Umschaltung folgenden Schaltwünsche erfasst werden und eine Filterung erfahren, deren Zeitkonstante relativ hoch ist, und dass im Fall eines Wunsches der Gangreduzierung die Zeitkonstante reduziert wird, wenn eine der folgenden Bedingungen erfüllt ist:
- das Fahrzeug hat seit der Variogramm-Umschaltung eine derartige Geschwindigkeitsreduzierung erfahren, dass die Abweichung zwischen seiner Augenblicksgeschwindigkeit und seiner Geschwindigkeit bei der Umschaltung im Absolutwert größer ist als eine vorab festgelegte Schwelle, oder
- das Fahrzeug erfährt eine signifikante positive Beschleunigung.

5. Steuerverfahren nach Anspruch 4, **dadurch gekennzeichnet, dass** die Zeitkonstante reduziert wird, wenn das Eindrücken des Gaspedals im Absolutwert eine bestimmte Verstellungsschwelle überschreitet.

6. Steuerverfahren nach Anspruch 5, **dadurch gekennzeichnet, dass** die Zeitkonstante reduziert wird, wenn die Ableitung des Eindrückens des Gaspedals im Absolutwert eine vorab festgelegte Verstellungsgeschwindigkeitsschwelle überschreitet.

7. Steuerverfahren nach Anspruch 4, 5 oder 6, **dadurch gekennzeichnet, dass** im Fall eines Wunschs der Gangerhöhung die Zeitkonstante reduziert wird, wenn eine der folgenden Bedingungen erfüllt ist:
- das Anheben des Gaspedals liegt im Absolutwert unter einer vorbestimmten Verstellungsschwelle, oder
- die Motordrehzahl überschreitet eine vorab festgelegte Drehzahlschwelle.
